# EUROPEAN PATENT APPLICATION

(11) **EP 1 953 408 A1**
(43) Date of publication of application: **06.08.2008**
(21) Application number: 08001693.4
(22) Date of filing: 30.01.2008
(51) Int. Cl.: F16F 1/38

(54) **A device for supporting, limiting, and providing a stop for a moving item or unit equipped with an elastic element of a dual-compound type, and a process for obtaining said elastic element**

(30) Priority: 05.02.2007 IT TO20070081
(71) Applicant: Di Sora, Egidio, 03100 Frosinone (IT)
(72) Inventor: Di Sora, Egidio, 03100 Frosinone (IT)
(74) Representative: Lotti, Giorgio

(57) **Abstract**

Described herein is a device for supporting, limiting, and providing a stop for a moving item or unit, said device comprising two rubber mixes injected one after the other into one and the same mould and bonded together by means of a chemical reaction during moulding so as to form a single body of a dual-compound type; one of the two rubbers (10, 12, 15) is of a soft type, whilst the other rubber (11, 13, 16) is of a type harder than the first.

## Description

The subject of the invention is a device for supporting, limiting, and providing a stop for a moving item or unit, said device being provided with an elastic element of a dual-compound type, as well as the process for obtaining said elastic element.

Supporting, limiting, and stopping devices find application in different sectors of mechanics, in the form, for example, of a reaction rod for engine suspensions, or else of an elastic mounting or "silent block" once more for engine suspensions, or yet again of a rebound bumper, for example, for suspensions of motor vehicles. Examples of application of these devices, however, not only regard the automotive sector, but these devices also find application wherever it is necessary to provide a support, limitation, and arrest for a moving item or unit.

The present description of the invention will consequently be limited to the aforesaid examples of application, merely for evident reasons of conciseness.

A reaction rod for engine suspension finds use in all those applications that require limitation and a stop for the engine unit when the latter is excited by the forces of acceleration and braking.

Generally, a reaction rod is constituted by a combination of rubber and metal. The shape of the reaction rods is such as to generate a load-yield curve appropriately studied so as to meet the acoustic requirements and the need for containment of engine vibrations.

In general, an excessively small range of travel of the reaction rod with a curve in the acoustic phase may prove valid as regards containment of the engine under torque, but harmful because already at a minimum torque the damping parts are reacting with stiffening of the static characteristic and consequent increase in the dynamic stiffness; in short, we have noise.

Long ranges of travel of the reaction rod solve the problem of noise but trigger the problem of engine jolting in conditions of sudden change of engine torque especially at very low levels of static stiffness (much lower than 20 daN/mm). Basically, what may provide a solution to critical aspects in terms of acoustics may give rise to problems of comfort.

The preparation of a traditional rubber-metal reaction rod is rather simple, but not always are the results obtained able to meet all the functional requirements.

The purpose of the invention is to provide a reaction rod presenting important characteristics, such as low dynamic stiffness in normal conditions of use (i.e., in the condition of static load and at low torque levels), with a damping capacity sufficient to react by partly absorbing the forces resulting from the torque (e.g. static torque), and moreover being capable of controlling any shaking of the engine within acceptable limits without interfering with the filtering requirements and without triggering noisy phenomena due to jolting.

A rebound bumper finds application in all situations that require a limitation and a stop for a moving unit such as, for example, the suspensions for motor vehicles.

Generally, a rebound bumper is made of single-compound rubber with a shape such as to generate an appropriately studied load-yield curve.

Said curve substantially contemplates two phases: a first phase that we shall define as "initial contact phase" with a rather marked characteristic of flexibility; and a second phase that we shall define as "closing phase of the damping process", presenting a high stiffness. Of fundamental importance for a good functional result is the right pattern of the curve in the passage from the first to the second phase.

Proper tuning of the two portions of curves and of the radiusing part generates the premises for a correct behaviour of the suspension and consequently an adequate level of comfort.

The static elastic characteristic of the first phase is obtained in the current embodiment with single-compound rubber of high hardness (65 shore) by studying the most appropriate shape.

However, the requirement of considerable flexibility of the first phase of the operating curve entails the need for the rebound bumper to have a first part with very slender geometrical profiles that are suitable for limited loads but present a poor behaviour in conditions of higher loads, which are normal during operation of a suspension.

In effect, corresponding to the increase in the load is the increase in the stress that is transferred onto this first part of the rebound bumper, determining an exaggerated deformation that frequently leads to failure due to bursting.

The solution forming the subject of the invention is important precisely because it enables a more efficient "regulation" of the characteristic in the first portion of the curve, i.e., in the first phase referred to as contact phase, and moreover because it enables closing of the curve so as to achieve an effective damping.

It is important to be able to regulate the characteristic of the component in the second phase defined as "damping phase" without any interference with the part involved in the first phase.

An elastic mounting for an engine suspension finds use in all those applications that require supporting, limiting, and providing a stop for the engine unit.

Generally, an elastic mounting is made up of a combination of rubber and metal (in which case it is referred to as traditional), or else by a combination of rubber, metal and liquid (in which case it is referred to as "hydro-elastic").

The shape of traditional or hydro-elastic mountings is such as to generate a load-yield curve appropriately studied so as to meet the requirements of acoustics, comfort, and vehicle handling. The functional difference between the two versions is determined by the capacity or otherwise to dampen the oscillations of the engine generated by the road.

The load-yield curve contemplates substantially three phases.

A phase, which we shall define as "acoustic phase", with a characteristic of rather marked flexibility comprised between other two phases, which we shall define as "damping phases", with a progressively higher stiffness; of fundamental importance for a good functional result is the correct pattern of the curve in the passage from the acoustic phase to the damping phases.

Proper tuning of the three portions of curve and of the radiusing parts generate the premises for a proper behaviour of the suspension and consequently the right level of comfort.

A traditional mounting is basically made up of an outer container for fixing to the body and by a central insert for connection to the engine; the two parts are joined by a rubber mix of medium-to-low hardness chosen according to the dimensions and the static load.

The static characteristic tends to present values that can vary from 10 to 20 kg/mm according to the application and with dynamic stiffness proportioned to the value of the static stiffness with amplification coefficients of between 1.5 and 1.7 so that there is a good response in terms of filtering of the vibrations induced by the engine and by the road.

The main critical feature that can be encountered with the use of these mountings is the poor containment of the engine during vertical shaking. This is due to the gap that is generated as a result of the yield under static load, which is sometimes of an amount even greater than 12 mm, and to damping, which in this case is to be considered practically inexistent.

A hydro-elastic mounting can be described in simple terms as a traditional mounting to which is added a channel/membrane system for cavitation and expansion of a fluid during operation.

These mountings were developed to meet the need for containment of the engine in the conditions that generate vertical shaking, since, by virtue of the damping characteristic, it is possible to limit it decidedly.

On the other hand, the presence of the fluid has an adverse impact on the dynamic stiffness, creating a poor filtering.

Generally, corresponding to a high damping there is a high dynamic stiffness above all for frequencies higher than 200 Hz.

The preparation of a hydro-elastic mounting requires a certain precision in producing the components since good features of hydraulic tightness are required. Even though said solution improves the performance, it presents production costs that are decidedly higher.

Much simpler, instead, is the preparation of a rubber-metal mounting.

The purpose of the invention is to provide a rubber-metal mounting, having a capacity of damping sufficient to contain any shaking of the engine within acceptable limits. By acting in particular on the shape, it is possible to obtain characteristics similar to those achieved with hydro-elastic mountings.

The solution forming the subject of the invention proves particularly useful since it enables damping values similar to those of a hydro-elastic mounting to be achieved at more contained costs.

In order to achieve the aforesaid purposes and others that depend upon the applications for which the device according to the invention is intended, a device is made available for supporting, limiting, and providing a stop for a moving item or unit according to Claim 1, as well as a process for producing a dual compound to be used in a device for supporting, limiting, and providing a stop for a moving item or unit, according to Claim 5.

The device according to the invention will now be described with reference to the attached drawings, in which:
- Figures 1 and 2 illustrate the device according to the invention in a first application and in two embodiments;
- Figures 3 and 4 are comparative diagrams of characteristics of the device, respectively, of a traditional type and according to the invention as per Figures 1 and 2;
- Figure 5 illustrates the device according to the invention in a second application;
- Figures 6 and 7 are comparative diagrams of characteristics of the device, respectively, of a traditional type and according to the invention as per Figure 5;
- Figure 8 illustrates the device according to the invention in a third application; and
- Figures 9 and 10 are comparative diagrams of characteristics of the device, respectively, of a traditional type and according to the invention as per Figure 8.

The device according to the invention will now be described in its preferred but in no way limiting embodiments and applications set forth above.

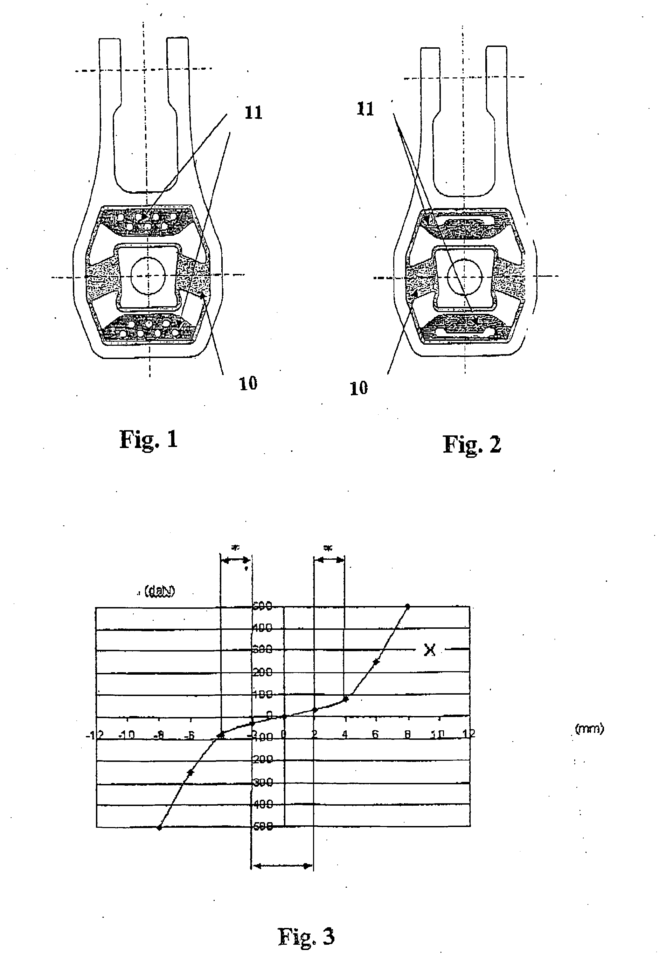

A reaction rod made according to the solutions indicated in Figures 1 and 2 is made up of a part 10, which we will define as part for connection of the engine to the body, which is made of soft rubber.

This mix, which presents low dynamic stiffness, enables a good filtering to be obtained in the condition of absence of static load and in the conditions of slight shaking of the engine by acting in such a way as to favour filtering of the vibrations.

The part 10 is generally sized so as to use natural rubber of a hardness of 45 shore.

At higher stresses, the additional damping parts 11 come into action, which in Figures 1 and 2 are represented with two different shapes to indicate the possibility of geometrical variations. These damping parts are made of damping rubber of a hardness of 65 shore and with shapes such as to create the right variation of static stiffness (progression in damping) in order to dampen properly the shaking of the engine and to obtain a progressive increase in the dynamic response.

The two mixes 10 and 11 are injected one after the other into one and the same mould and are bonded together by means of a chemical reaction during moulding without addition of adhesivizing solutions and without prior preparation of the rubbers.

All the loads in a longitudinal direction (namely, loads under normal running conditions of the engine and impulsive loads) are absorbed by the rubber 11 that has a hardness of 65 shore, which reduces the stress on the 45-shore rubber and consequently enables the required levels of reliability to be achieved.

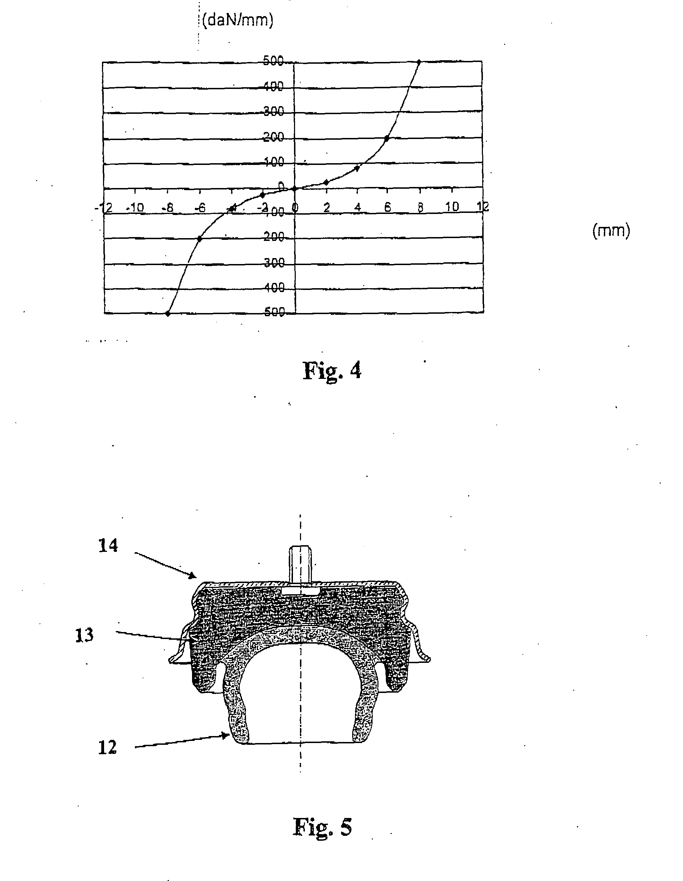

There now follows a comparison between the characteristics of a traditional reaction rod (Figure 3) and one according to the invention (Figure 4).

The load-yield curve substantially contemplates three phases.

A phase that we shall define as "acoustic phase" with a rather marked characteristic of flexibility (between 11 daN/mm and 30 daN/mm), which can be measured on the diagram between ±3mm of yield (marked with an asterisk in the diagram of Figure 4) and is comprised between the other two phases that we shall define as "damping phases".

The damping phases present a progressively higher static stiffness; of fundamental importance for a good functional result is the correct pattern of the curve in the passage from the first to the second phase in order to prevent troublesome phenomena for the occupants of the motor vehicle, such as for example the noise due to jolting.

Even though damping is obtained with interposition of the rubber between the metals, this type of fault is frequently encountered.

Proper tuning of the three portions of curve and of the radiusing parts generates the premises for a correct behaviour of the suspension and consequently a right level of acoustics and comfort.

Given in Figure 4 is a load-yield diagram referring to a longitudinal direction with respect to the direction of travel of the vehicle for a dual-compound reaction rod according to the invention, said diagram being the typical diagram for a centroidal suspension for an automobile of the segment B-C..

In this case, the three phases identified by the letters A, B, and C are important.
Phase A: Rebound damping (oscillation of the engine accelerating in reverse)
Phase B: Operating range with certified static and dynamic stiffness
Phase C: Damping (oscillation of the engine accelerating when the vehicle is moving forwards)

The static stiffness measured in the portion corresponding to Phase B, i.e., around static load (in general point O), is decidedly low and does not exceed 12 kg/mm.

Said value extends for a yield of ±2 mm with respect to the position under static load. This operating range is referred to as operating range with certified stiffness; its static and dynamic characteristic is of fundamental importance for filtering the vibrations.

A comparison of the curves highlights, in that of Figure 4, the reduction in the rectilinear portion with certified stiffness with start of entry into action of the damping parts; this is advantageous for control of the movement of the engine anticipated with respect to what has so far been obtained with the reaction rod of Figure 3.

In addition, in the above range, the rubber part made of a 65-shore damping mix goes into action in the portion of curve comprised between 2 and 4 mm and between -2 and -4 mm, thus creating an additional stiffness, which, together with that of the initial portion (phase B), leads to a resulting stiffness of the order of 30 daN/mm (this value can be modelled as required).

In the table appearing below, the important functional characteristics are compared. The reaction rod forming the subject of the invention presents various advantages as compared to the traditional solution normally used since it enables a greater regulation of the two stiffnesses by acting both on the variation of the hardness and on the shape. The shape must in any case be studied so as to support the loads envisaged and consequently the ranges of travel envisaged.

| Solution | Damping | Static stiffness between ±2 mm | Dynamic stiffness between ±2 mm | Static stiffness from ±2 to ±4 mm | Dynamic stiffness from ±2 to ±4 mm |
|---|---|---|---|---|---|
| Single compound | 3°max | 15 daN/mm | 24 daN/mm | Up to 50 daN/mm | Up to 100 daN/mm |
| Dual compound | 15° | 12 daN/mm | 19 daN/mm | 30 daN/mm | 90 daN/mm |

The use of a 45-shore mix is particularly indicated from the acoustic standpoint. Using for the damping phase a 65-shore damping mix there is a reduction in the degree of the response to stresses, so that, since the loads applied are damped, an inertia of the suspension will be obtained with an improvement in comfort.

Finally, it should be noted that the values of Shore hardness given above are not to be deemed binding, but may undergo variations according to the technical requirements of the product.

A rebound bumper made as indicated in Figure 5 is constituted by an internal ring 12 made of soft rubber of a hardness of 45 shore and by an external ring 13 made of rubber with a hardness of 65 shore, the latter being glued or force fitted on the metal plate 14.

The two mixes 12 and 13 are injected one after the other in one and the same mould and are bonded together by means of a chemical reaction during moulding without addition of adhesivizing solutions and without prior preparation of the rubbers.

In the embodiment illustrated, the 45-shore internal rubber 12 is assigned the task of supporting the loads corresponding to normal running conditions of the engine. All the impulsive loads are, instead, absorbed by the external rubber 13 having a hardness of 65 shore. The reason for this choice is to reduce the stress on the 45-shore rubber so as to reach the required levels of reliability.

The rebound bumper in the traditional single-compound solution can be used for deformations that will not reduce beyond 50% the length under fatigue load so that for a rebound bumper having a total length of 70 mm a squeezing greater than 35 mm under the fatigue load is not contemplated; otherwise, it becomes unreliable.

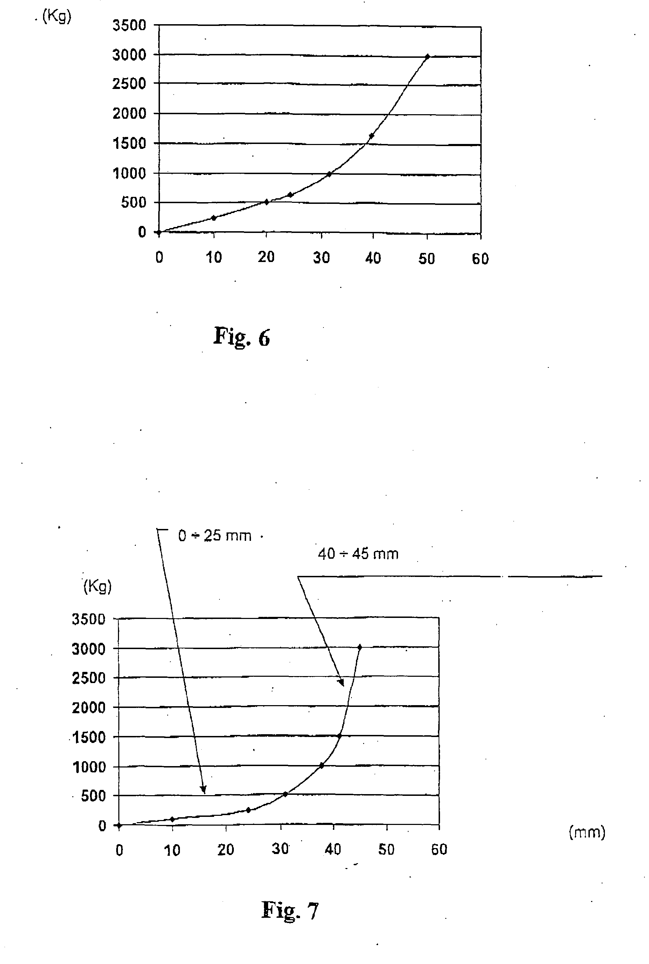

Appearing in Figure 6 is the typical load-yield curve for a rebound bumper of such a length.

The rebound bumper can be sized so as to obtain the initial part of the diagram with a static stiffness of 25 kg/mm, whereas the damping part of the diagram shows a low stiffness with a yield, under a maximum load of 3000 kg, of more than 50 mm. If, in order to achieve a lower initial stiffness, the first part of the curve is made to present greater flexibility, this means that the entire curve will present a greater flexibility, with consequent excessive ranges of travel at the fatigue load and at the maximum load.

An excessive travel at the maximum load means that it will be impossible to stop the suspension within limits that will prevent damage to the shock absorber.

Attempts to reduce the maximum travel can be made by appropriately modifying the container, but with the result that the curve will present a higher stiffness than the one represented. A rebound bumper with excessive stiffness in the initial portion prevents proper operation of the shock absorber and generates noise. Furthermore, if damping takes place too fast the result will be an unpleasant jolt.

Given the same height (70 mm) for the single-compound rebound bumper as for the dual-compound rebound bumper, as a result of the change in geometry between the two parts made of two different mixes and consequently the ranges of travel to which the two parts are subjected, represented in Figure 7 is a hypothesis of curve referring to the solution forming the subject of the invention. As may be seen, the curve in the first portion can reach values of static stiffness of as much as 10 kg/mm. In the damping portion, instead, it can reach and exceed 350 kg/mm, guaranteeing that the yield limit will not be exceeded under the maximum load of 3000 kg.

It should be recalled that if said limit is exceeded, the shock absorber enters a critical state. The radiusing portion between the first part of the curve (contact) and the second part (damping) is regulated by the shape of the external rubber as well as by the combined action of the two rubbers. The external rubber functions as a sort of hoop to contain the internal rubber, i.e., limiting expansion thereof.

The rebound bumper forming the subject of the invention presents various advantages as compared to the single-compound solution normally adopted since it enables a greater regulation of the two stiffnesses, it being possible to act both on the variation of the hardness and on the shape. The latter must in any case be studied so as to withstand the loads envisaged and consequently the corresponding ranges of travel.

Since the 45-shore rubber of the first portion is better than the 65-shore mix from the point of view of transmission of vibrations owing to the fact that given the same static stiffness the dynamic stiffness is lower, there is a considerably reduction in the number and in the amplitude of the vibrations transmitted to the body.

The table below summarizes the differences in the static and dynamic characteristics, which can be deduced from the diagrams described previously. The value of the dynamic stiffness in the version forming the subject of the invention is more than three times lower than the one that can be found in the single-compound version.

| Solution | Static stiffness | Dynamic stiffness |
|---|---|---|
| Single compound | 25 daN/mm | > 50 daN/mm |
| Dual compound | 10 daN/mm | 16 daN/mm |

If a 65-shore damping mix is used for the damping phase, the degree of response to stresses is reduced, so that, since the loads applied are damped, an increase in the inertia of the suspension will be obtained, with consequent improvement in terms of the comfort.

It should on the other hand be considered that the Shore hardnesses given above are not parameters to be deemed binding, but may undergo variations according to the technical requirements of the product.

Said advantages consequently ensure a general improvement of the suspension with the use of the rebound bumper according to the solution forming the subject of the invention.

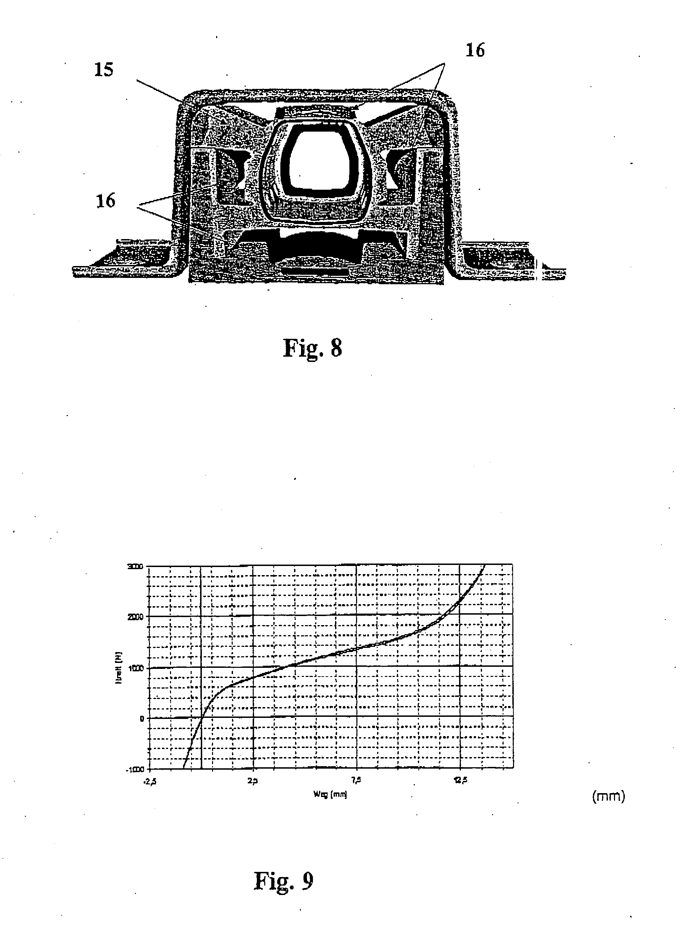

An elastic mounting made as is shown in Figure 8 is made up of one part 15 that we shall define as "load-bearing", i.e., capable of supporting the weight of the engine, and is made of soft rubber with a static stiffness assumed as being of 10 daN/mm.

The above mix, which has a low dynamic stiffness, enables a good filtering to be obtained in the condition of static load and in the conditions of slight shaking of the engine.

The above part 15 is generally sized so as to enable the use of natural rubber having a hardness of 45 shore.

For vertical stresses of a higher degree additional damping parts 16 enter into action. The latter are made of damping rubber having a hardness of 65 shore and present shapes such as to create the right variation of the static stiffness (progression in damping) in order to achieve proper damping of the oscillations of the engine and a progressive increase in the dynamic response.

The degree of damping of the mix envisaged can even reach 14° as against just 3° of a normal rubber.

The two mixes 15 and 16 are injected one after the other into one and the same mould and are bonded together by means of a chemical reaction during moulding without addition of adhesivizing solutions and without prior preparation of the rubbers.

All the loads in the vertical direction (namely, loads under normal running conditions of the engine and impulsive loads) are absorbed by the rubber with a hardness of 65 shore, which reduces the stress on the 45-shore rubber and consequently enables the required levels of reliability to be achieved.

Appearing in Figure 9 is a curve of the vertical static stiffness of a traditional mounting made of rubber and metal or of a hydro-elastic mounting.

Considering that said diagram refers to an elastic mounting that is pre-compressed so that the travel in the direction (-1000) is already reduced it may in any case be found that, for example, in the case of a static pre-loading of 1300 N, a value of travel of 9 mm is exceeded prior to start of damping. This means for a traditional mounting made of rubber and metal an excessive freedom, with the result of an excessive shaking of the engine and consequent lack of comfort.

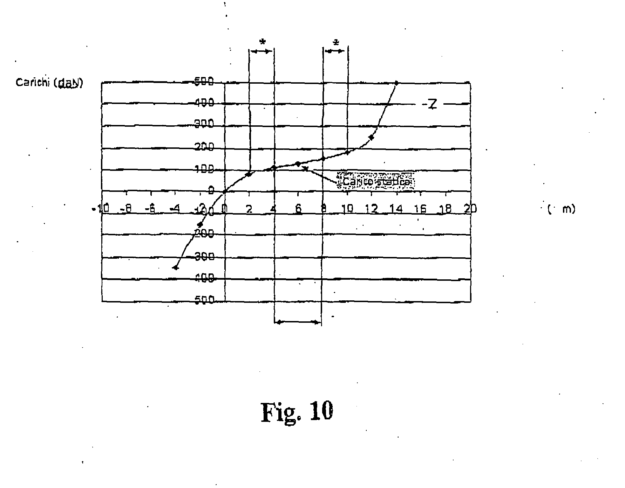

Figure 10 presents a load-yield diagram in a vertical direction for an elastic mounting in the version forming the subject of the present invention typical for a centroidal suspension for a motor vehicle of the segment B-C.

The following three phases are important.
Phase A: Rebound damping (oscillation of the engine upwards), yield comprised between 2 and 4 mm;
Phase B: Portion with certified static and dynamic stiffness, yield comprised between 4 and 8 mm;
Phase C: Damping (oscillation of the engine accelerating downwards), yield comprised between 8 and 10 mm.

As may be noted, the certified static and dynamic stiffnesses (Phase B) are decidedly reduced and converge into the damping portions through a progressive curve with gentle variations in Phase A and in Phase C; in these portions, there is an increase in the static stiffness of approximately 40%, with evident variation in the acoustic picture (slight increase in the dynamic stiffness and reduction in the filtering capacity), but contained in terms altogether advantageous as compared to the hydro-elastic version.

In these portions the phase of control of the engine displacements starts.

The table appearing below compares the values of damping and the dynamic stiffnesses of the solution forming the subject of the present invention with the current versions of mountings.

| Solution | Damping | Static stiffness | Dynamic stiffness |
|---|---|---|---|
| Rubber-metal | 3° max | 15 daN/mm | 24 daN/mm |
| Hydro-elastic | > 30° | 15 daN/mm | 33 daN/mm |
| Dual compound | 15° | 10 daN/mm | 16 daN/mm |

The dual-compound elastic mounting forming the subject of the present invention presents various advantages over the traditional solution made of rubber and metal that is normally employed since it enables a greater regulation of the two stiffnesses by acting both on the variation of the hardness and on the shape; the latter must in any case be studied so that it can withstand the envisaged loads and the consequent ranges of travel.

It renders possible the use of a 45-shore mix, which is optimal for the part that is important from the acoustic standpoint. By using a 65-shore damping mix for the damping phase, the degree of response to stresses is reduced; consequently, since the loads applied are damped, an inertia of the suspension will be obtained, with consequent improvement in terms of comfort and improved containment of the engine. The values of Shore hardness given above are not to be deemed as binding, but may undergo variations according to the technical requirements of the product.

A better acoustic response (filtering) is also achieved, owing to the lower static stiffness (10 daN/mm instead of 15 daN/mm).

As compared to the hydro-elastic mounting, apparently the dual-compound elastic mounting is inferior as regards the capacity for damping if read in terms of absolute value as compared to the hydro-elastic mounting (15° as against 30°). However, there is to be taken into account the different freedom of movement of the engine determined by the curve with differentiated stiffness in the certified-stiffness portion and in the immediately adjacent portions. This choice intervenes in favour of the limitation of the engine shaking, with a clearly favourable overall result.

There is a decided improvement in the dynamic characteristic (16 daN/mm as against 33 daN/mm), which is due to the lower static stiffness and to the absence of the liquid, with consequent results in favour of a better filtering of the vibrations in the condition of the static load. Also in the portions immediately adjacent to the static load, there is a better dynamic response (dynamic stiffness of 26 daN/mm for a static stiffness of 15 daN/mm).

## Claims

1. A device for supporting, limiting, and providing a stop for a moving item or unit, **characterized in that** it comprises two rubber mixes injected one after the other in one and the same mould and bonded together by means of a chemical reaction during moulding so as to form a single body of a dual-compound type; one of the two rubbers (10, 12, 15) being of a soft type, whilst the other rubber (11, 13, 16) is of a type harder than the first.

2. The device according to Claim 1, **characterized in that** the chemical reaction occurs without addition of adhesivizing solutions and without prior preparation of the rubbers.

3. The device according to Claim 1, **characterized in that** the two rubbers have values of Shore hardness different from one another.

4. The device according to Claim 1, **characterized in that** the soft rubber (10, 12, 15) has a hardness of 45 shore, whilst the harder rubber (11, 13, 16) has a hardness of 65 shore.

5. A process for producing a dual compound to be used in a device for supporting, limiting, and providing a stop for a moving item or unit, in which the dual compound is constituted by two rubbers, one of which is of a soft type (10, 12, 15) whilst the other is of a type (11, 13, 16) harder than the first; the process being **characterized in that** the two rubbers are injected one after the other in the mould in which the device is obtained and in which the two rubbers are bonded together by means of a chemical reaction.
